# EUROPEAN PATENT SPECIFICATION

(11) **EP 4 454 455 B1**
(45) Date of publication and mention of the grant of the patent: **10.06.2026**
(21) Application number: 22910272.8
(22) Date of filing: 22.12.2022
(51) Int. Cl.: A01D 78/04

(54) **WINDROWER RAKE**
SCHWADERSCHWADER
RÂTEAU ANDAINEUR

(30) Priority: 23.12.2021 ES 202131201
(43) Date of publication of application: 30.10.2024
(73) Proprietor: Stirmot, S.L., 47800 Medina de Rioseco Valladolid (ES)
(72) Inventor: ARCE GARCÍA, Diego, 47800 Medina de Rioseco (Valladolid) (ES)
(74) Representative: Ungria López, Javier
(86) International application number: PCT/ES2022/070832
(87) International publication number: WO 2023/118640

(56) References cited:
- EP-A1- 2 839 731
- ES-A2- 2 548 105
- ES-A2- 2 548 105
- US-A1- 2011 137 012
- US-A1- 2013 104 513
- STIRMOT: "Forraje of calidad", INTERNET CITATION, 13 August 2022 (2022-08-13), XP009547900, Retrieved from the Internet <URL:https://es-es.facebook.com/stirmot/videos/%F0%9D%97%99%F0%9D%97%A2%F0%9D>
- STIRMOT: "Forraje of calidad", FACEBOOK, XP009547900, Retrieved from the Internet <URL:https://es-es.facebook.com/stirmot/videos/%F0%9D%97%99%F0%9D%97%A2%F0%9D> [retrieved on 20221013]
- STIRMOT HILERADORES: "Íbero es el hilerador más versatil del mercado.", YOUTUBE, XP093077633, Retrieved from the Internet <URL:https://www.youtube.com/watch?v=QZYpntrECyA> [retrieved on 20230831]
- STIRMOT HILERADORES: "Andaineur IBERO 912 (FRANCE)", YOUTUBE, XP093077635, Retrieved from the Internet <URL:https://www.youtube.com/watch?v=N1fpvyJa6o8> [retrieved on 20230831]

## Description

### TECHNICAL FIELD

The present invention relates to a windrower rake consisting of a comb and a blade rotor having a special configuration that makes it possible to optimise the windrowing system, avoiding material loss and forage entanglement in the rotating areas of the machine, thereby increasing the performance and efficiency of the machine.

The invention is comprised in the field of agricultural machinery, and more specifically in forage collection machinery.

### BACKGROUND OF THE INVENTION

The windrower rake is an agricultural machine that groups forage into strips or rows to facilitate the work of collecting the forage.

Its action is based on the movement of metallic elements known as teeth or fingers, capable of continuously sweeping the forage, in such a way that, by means of the longitudinal movement of the windrower rake over the ground to be raked, the movement of the teeth or fingers over said ground moves and accumulates the forage into rows or strips that comprise the direction followed by the rake.

Depending on the characteristics of the supports that fix the teeth or fingers, three types of rakes are established:
- Mounting on straight bars: horizontal or oblique reel rakes;
- Radial mounting on a rotating shaft: sun rakes and vertical or gyroscopic reel rakes;
- Mounting on an endless conveyor: chain rakes or transverse belt.

In the case of horizontal and oblique reel windrowers or parallel bars, the main characteristic of these windrowers is that they perform gentle raking, without damaging the plant, preserving all its properties. Furthermore, cleaner forage, without stones or impurities, is achieved.

Its operation is based on fingers or teeth that perform the raking. These are mounted on several straight bars attached at their ends to disks or reels on each side. These rotate around a horizontal shaft, which is why they are often called parallel bar rakes or horizontal reel rakes.

The rotation of the reel will generate the rotational movement of the bars with respect to the horizontal shaft, in turn generating the desired sweeping of the forage. When a bar approaches the ground, the hooks touch the hay and push it laterally. The next bar will continue the work, thus generating a continuous movement of the hay or element to be swept, in a lateral direction, as the rake moves longitudinally over the ground, until creating an accumulation of the swept hay in the form of rows or strips.

The rotation of the reel together with the advancement of the tractor causes the teeth to continuously drive the forage laterally and towards the direction of travel, creating a constant flow of forage in a "wave shape", also called tangle. As a result of the advancement of the tractor, the tangle is deposited along a line or row that facilitates the subsequent collection of the forage.

As is known in the state of the art, in oblique reel windrowers, the bars that comprise it describe a flattened cylinder, as the bars are inclined with respect to the drive shafts of the assembly. Each bar moves from back to front and simultaneously in a transverse direction, allowing hay to be swept.

However, this machine has certain drawbacks: the flow of forage may no longer be constant and homogeneous under certain working conditions, causing material loss, irregular rows and even forage jamming in the machine.

More specifically, the forage enters the comb, creating the "tangle" or "wave". However, part of the forage that enters the comb disperses and leaves the tangle, jumping over the comb and, as a consequence, generating material loss, entanglements of forage in the bars and rotating parts, resulting in a loss of machine efficiency.

Document ES2548105 A2 discloses a collecting and folding system for a rake, designed to accumulate in a row the product from several mowing passes. It comprises means for easy, fast, and safe coupling to any baler, in such a way that the same pass is used to perform both swathing and baling operations. The system can be positioned parallel to and above the baler, and it also allows for placement parallel to the packaging machine in case of impact or accident.

### DESCRIPTION OF THE INVENTION

The windrower rake of the invention fully resolves the aforementioned problem in a satisfactory manner based on a simple but equally effective solution.

To this end, and more specifically, the machine of the invention relates to a windrower rake, configured to group forage, located on the ground, into strips or rows, wherein said rake comprises two main structural elements, a comb and a blade rotor.

The comb, also known as a body within the sector, comprises a plurality of comb teeth arranged along two or more bars, preferably five bars, which are oriented in a horizontal direction. The comb also comprises two rotating disks (also known as reels) each being connected to an end portion of each bar, the rotating disks being configured to rotate, with respect to a first oblique horizontal shaft, actuated by a first self-propelling system, transmitting a sweeping movement to the bars. That is, it comprises a structure similar to horizontal or oblique reel rakes.

The blade rotor is assembled on the comb, preferably rigidly attached by means of mechanical elements such as screws, bolts, rivets or welding, said blade rotor being located at a higher height and ahead of said comb, depending on the direction of use of the windrower rake.

The arrangement of the elements indicated in these embodiments, such as the horizontal position of the bars, the first oblique horizontal shaft, or the position of the blade rotor with respect to the comb, is determined when the windrower rake is in the position of use or operation. Thus, by indicating that the blade rotor is at a higher height and ahead of said comb, it means that in the raking movement of the windrower rake, the comb is in a typical operating position and the blade rotor is located at a higher height with respect to the raked ground, moved in a longitudinal direction a small separation suitable for the operation described.

The blade rotor comprises a transverse horizontal shaft, configured to rotate on itself, integral with a sweeping element which is selected from the group comprising: a plurality of blades, a plurality of teeth and a plurality of disks, said sweeping element being distributed in a preferably regular manner along said transverse shaft, wherein the transverse horizontal shaft is configured to transmit a rotation movement to the sweeping element, the rotation of the transverse shaft being actuated by a second self-propelling system.

In one embodiment, the self-propelling systems are selected from a group comprising a hydraulic motor, an electric motor and a mechanical transmission.

In one embodiment, the direction of rotation of the transverse shaft that rotates the sweeping element is configured for said sweeping element to push the forage towards the ground to be raked. In this way, the direction of rotation of the transverse shaft is opposite the direction of rotation of the tangle generated with the rotation movement of the rotating disks of the comb.

In one embodiment, the sweeping element is partially covered by a casing comprised in the blade rotor, which prevents said rotor from being subjected to unwanted jams.

In one embodiment, the sweeping element comprises a plastic material and in another embodiment, the sweeping element comprises a metallic material, said material being the most common material used in the sector.

The objective of the blade rotor, placed on the comb, is to push the forage, helping it to generate a constant and homogeneous flow of material.

The sweeping element, whether in the form of blades, teeth or disks, performs various functions:
- It prevents the material from dispersing by making it advance towards the direction of material flow and incorporating it into the tangle.
- It contributes to the movement of the tangle, pushing it and avoiding jams
- The fingers are inserted into the forage, avoiding entanglement and providing a tangle of spongy and homogeneous forage.

The combination of these two elements, comb and blade rotor, makes it possible to solve the aforementioned work problems and thus achieve perfect raking in any situation and working conditions.

The machine guarantees a constant and homogeneous flow of forage without damaging it, avoiding entanglements in the machine's mechanics and thus the loss of all that material, considerably increasing its effectiveness.

Based on this structure, the following advantages are derived compared to traditional reel windrowers:
- It guarantees a constant and homogeneous flow of forage without damaging it, facilitating drying.
- Great added versatility, as it achieves perfect windrowing in any environmental condition and in any state of the material, whether dry or wet, and is capable of transferring a greater amount of forage than existing systems.

### DESCRIPTION OF THE DRAWINGS

As a complement to the description that will be provided herein, and for the purpose of helping to make the features of the invention more readily understandable, according to a preferred practical exemplary embodiment thereof, said description is accompanied by a set of drawings constituting an integral part thereof in which, by way of illustration and not limitation, the following is represented:
Figure 1 shows a perspective view of a windrower rake made according to the object of the present invention.
Figure 2 shows a front elevation view of the assembly of the preceding figure.
Figure 3 shows a side perspective view of the equipment of the previous figures.
Figure 4 shows a view of the body, screen comb or basket of a rake.
Figure 5 shows a perspective view of the blade rotor comprised in the device of the invention.
Figure 6 shows a profile view of the assembly of figure 5.
Figure 7 shows a side perspective view of the machine of the invention, on which the path of the forage as it passes through the windrower rake is represented with lines and arrows.
Figure 8 finally shows a front-upper perspective view of the device of the invention, on which the path of the forage as it passes through the machine is represented with lines and arrows.

### PREFERRED EMBODIMENT OF THE INVENTION

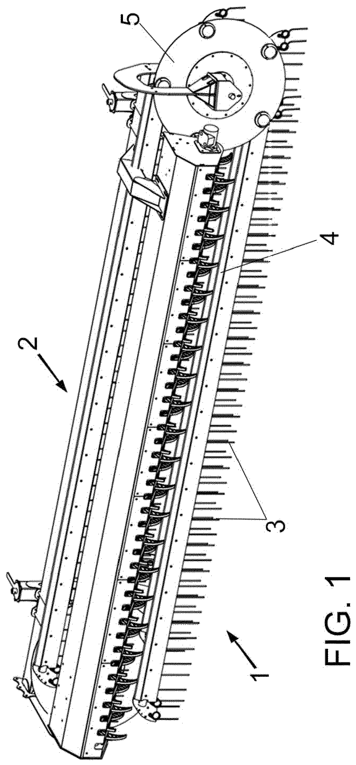

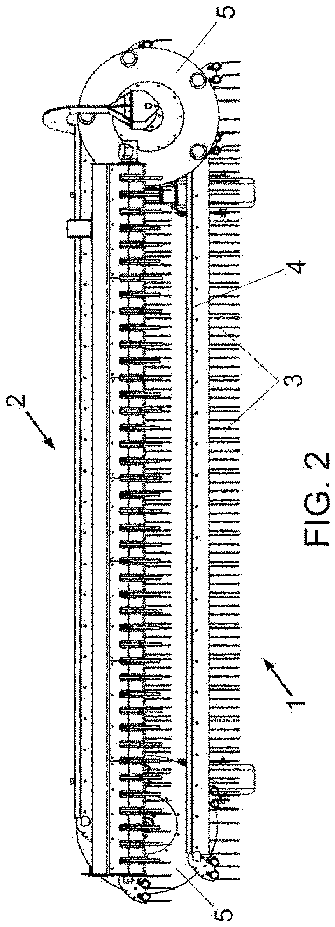

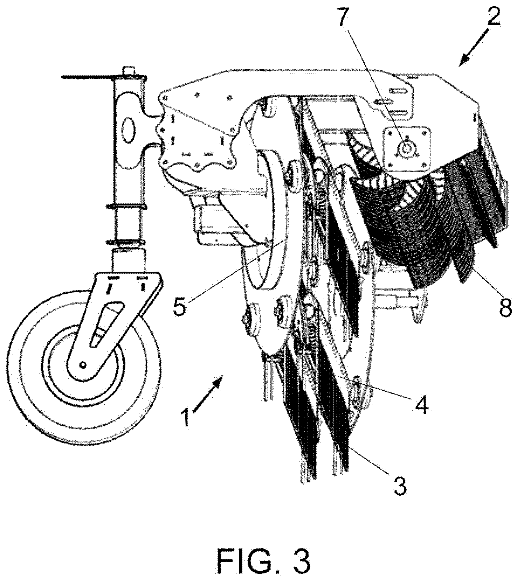

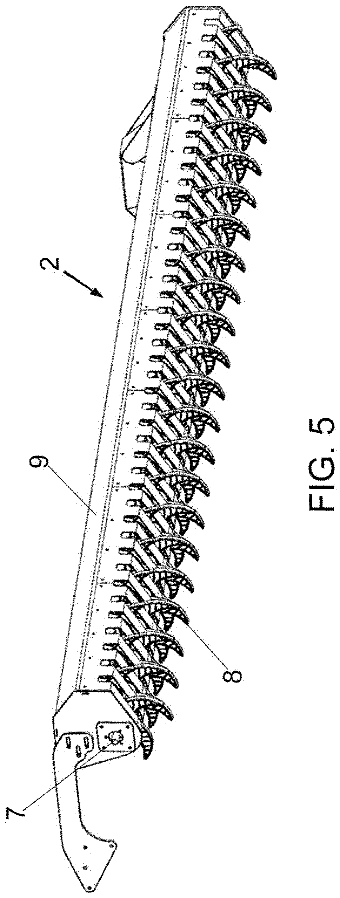

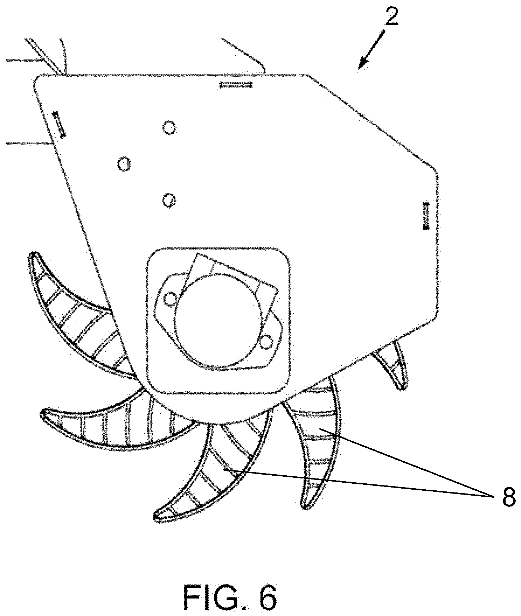

In view of the described figures, it can be seen how the windrower rake of the invention is made up of two main structural elements; a body or comb (1) shown in Figures 1 to 4, and a blade rotor (2), shown in detail in Figures 5 and 6.

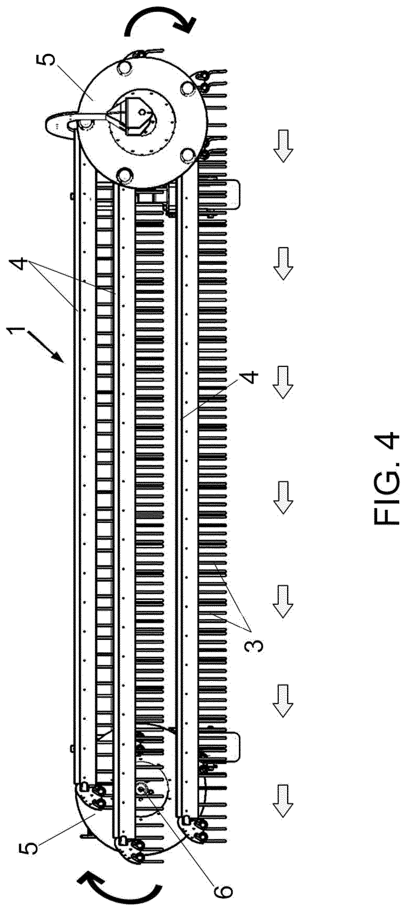

According to Figure 4, the comb (1) contains a plurality of comb teeth (3) arranged along several horizontal bars (4) which, in turn, are mounted on each side on two rotating disks (5) or reels that rotate around an oblique horizontal shaft (6) actuated by a hydraulic motor, electric motor, mechanical transmission or any self-propelling system.

Figures 5 and 6 show the structure of the blade rotor (2), consisting of a transverse horizontal shaft (7) with movement integral to a sweeping element (8), said sweeping element (8) being a plurality of teeth, blades or disks distributed along same, partially covered by a casing (9) and actuated by a hydraulic motor, electric motor, mechanical transmission or any self-propelling system.

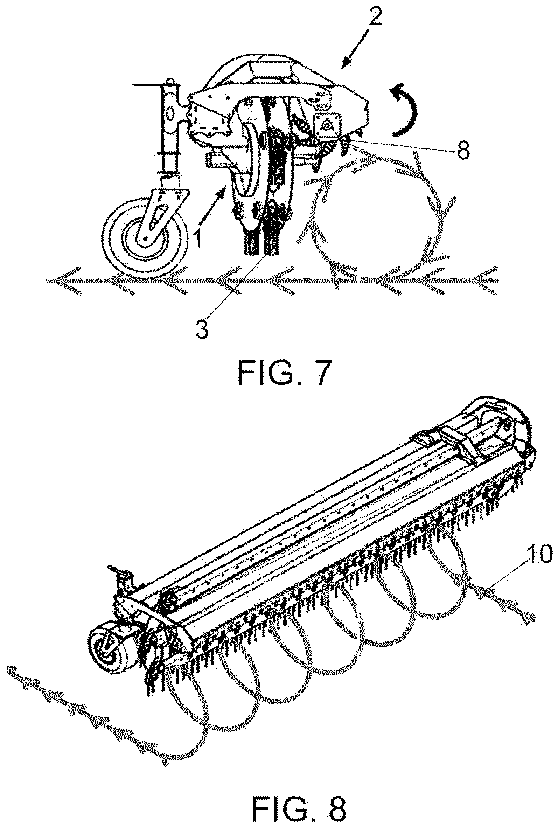

As shown in figures 7 and 8, the machine guarantees a constant and homogeneous flow of forage without damaging it. These figures show the flow (10) of forage and how, in this case, no loss of material is generated above the comb, avoiding entanglements in the mechanics of the machine and thus the loss of all that material, considerably increasing its effectiveness.

More specifically, the blade rotor (2) is responsible for pushing the forage, helping it to generate a constant and homogeneous flow of material, so that the sweeping element (8) prevents the material from dispersing and going over the top of the comb (1), making it advance towards the direction of the material flow and incorporating it into the tangle, pushing it and avoiding jams.

In this sense, the sweeping element (8) is introduced into the forage, avoiding entanglements and providing a tangle of fluffy and homogeneous forage.

As previously stated, the direction of rotation of the sweeping element (8) is opposite the direction of rotation of the tangle, and said teeth may be made of plastic or be metallic in nature.

The windrower rake is made up of two main structural elements; a body or comb (1) and a blade rotor (2), wherein:
a) The comb (1) contains a plurality of teeth (3) arranged along several horizontal bars (4) which, in turn, are mounted on each side on two rotating disks (5) or reels that rotate around a horizontal shaft (6) actuated by a hydraulic motor, electric motor, mechanical transmission or any self-propelling system.
b) The blade rotor (2) is located above and in front of the comb (1), including a transverse horizontal shaft (7) to which a plurality of teeth (8), blades or disks distributed along the length thereof, are rigidly connected, partially covered by a casing (9) and actuated by a hydraulic motor, electric motor, mechanical transmission or any self-propelling system.

As previously stated, the direction of rotation of the teeth (8) is opposite the direction of rotation of the tangle, and said teeth may be made of plastic or be metallic in nature.

## Claims

1. A windrower rake configured to group forage, located on the ground, into strips or rows, wherein the windrower rake comprises a comb (1) ;
wherein the comb (1) comprises a plurality of comb teeth (3) arranged along two or more bars (4) oriented horizontally; wherein the comb (1) also comprises two rotating disks (5) each of which is connected to an end portion of each bar (4), the rotating disks (5) being configured to rotate with respect to a first oblique horizontal shaft (6), actuated by a first self-propelling system, transmitting a sweeping movement to the bars (4);
**characterised in that** the windrower rake comprises two main structural elements: said comb (1) and a blade rotor (2) assembled on the comb (1), wherein said blade rotor (2) being located at a higher height and ahead of said comb (1), according to the direction of use of the windrower rake;
wherein the blade rotor (2) comprises a transverse horizontal shaft (7), configured to rotate on itself, integral with a sweeping element (8) which is selected from the group comprising: a plurality of blades, a plurality of teeth and a plurality of disks, said sweeping element (8) being distributed along said transverse shaft (7), wherein the transverse horizontal shaft is configured to transmit a rotation movement to the sweeping element (8), the rotation of the transverse shaft (7) being actuated by a second self-propelling system.

2. The windrower rake according to the previous claim, wherein the self-propelling systems are selected from a group comprising a hydraulic motor, an electric motor and a mechanical transmission.

3. The windrower rake according to any of the preceding claims, wherein the direction of rotation of the transverse shaft (7) that rotates the sweeping element (8) is configured for said sweeping element (8) to push the forage towards the ground to be raked.

4. The windrower rake according to any of the preceding claims, wherein the sweeping element (8) is partially covered by a casing (9) comprised in the blade rotor (2).

5. The windrower rake according to any of the preceding claims, wherein the sweeping element (8) comprises a plastic material.

6. The windrower rake according to any of claims 1 to 4, wherein the sweeping element (8) comprises a metallic material.

## Patentansprüche

1. Schwadmäherharke, die dazu konfiguriert ist, Viehfutter, das sich auf dem Boden befindet, in Streifen oder Reihen zu gruppieren, wobei die Schwadmäherharke einen Kamm (1) umfasst;
wobei der Kamm (1) eine Vielzahl von Kammzähnen (3) umfasst, die entlang zweier oder mehrerer Balken (4), die horizontal ausgerichtet sind, angeordnet sind; wobei der Kamm (1) außerdem zwei rotierende Scheiben (5), von denen jede mit einem Endabschnitt jedes Balkens (4) verbunden ist, umfasst, wobei die rotierenden Scheiben (5) dazu konfiguriert sind, in Bezug auf eine erste schräge horizontale Welle (6) zu rotieren, die durch ein erstes selbstantreibendes System ausgelöst wird und eine fegende Bewegung auf die Balken (4) überträgt;
**dadurch gekennzeichnet, dass** die Schwadmäherharke zwei strukturelle Hauptelemente umfasst: den Kamm (1) und einen Messerrotor (2), der an dem Kamm (1) montiert ist, wobei
sich der Messerrotor (2) gemäß der Verwendungsrichtung der Schwadmäherharke auf einer höheren Höhe als der und vor dem Kamm (1) befindet;
wobei der Messerrotor (2) eine querliegende horizontale Welle (7) umfasst, die dazu konfiguriert ist, sich um sich selbst zu drehen, integral mit einem Fegeelement (8), das aus der Gruppe ausgewählt ist, die Folgendes umfasst: eine Vielzahl von Messern, eine Vielzahl von Zähnen und eine Vielzahl von Scheiben, wobei das Fegeelement (8) entlang der querliegenden Welle (7) verteilt ist, wobei die querliegende horizontale Welle dazu konfiguriert ist, eine Drehbewegung auf das Fegeelement (8) zu übertragen, wobei die Drehung der querliegenden Welle (7) durch ein zweites selbstantreibendes System ausgelöst wird.

2. Schwadmäherharke nach dem vorhergehenden Anspruch, wobei die selbstantreibenden Systeme ausgewählt sind aus einer Gruppe umfassend einen hydraulischen Motor, einen elektrischen Motor und ein mechanisches Getriebe.

3. Schwadmäherharke nach einem der vorhergehenden Ansprüche, wobei die Drehrichtung der querliegenden Welle (7), die das Fegeelement (8) dreht, so konfiguriert ist, dass das Fegeelement (8) das Viehfutter zu dem zu harkenden Boden schiebt.

4. Schwadmäherharke nach einem der vorhergehenden Ansprüche, wobei das Fegeelement (8) teilweise durch ein Gehäuse (9), das in dem Messerrotor (2) umfasst ist, bedeckt ist.

5. Schwadmäherharke nach einem der vorhergehenden Ansprüche, wobei das Fegeelement (8) ein Kunststoffmaterial umfasst.

6. Schwadmäherharke nach einem der Ansprüche 1 bis 4, wobei das Fegeelement (8) ein Metallmaterial umfasst.

## Revendications

1. Râteau andaineur configuré pour regrouper le fourrage, situé sur le sol, en bandes ou en rangs, dans lequel le râteau andaineur comprend un peigne (1) ;
dans lequel le peigne (1) comprend une pluralité de dents de peigne (3) disposées le long de deux ou plusieurs barres (4) orientées horizontalement ; dans lequel le peigne (1) comprend également deux disques rotatifs (5) reliés chacun à une partie d'extrémité de chaque barre (4), les disques rotatifs (5) étant configurés pour tourner par rapport à un premier arbre horizontal oblique (6), actionné par un premier système d'autopropulsion, transmettant un mouvement de balayage aux barres (4);
**caractérisé en ce que** le râteau andaineur comprend deux éléments structuraux principaux : ledit peigne (1) et un rotor à lames (2) assemblé sur le peigne (1), dans lequel ledit rotor à lames (2) est situé à une hauteur plus élevée et en avant dudit peigne (1), selon le sens d'utilisation du râteau andaineur ;
dans lequel le rotor à lames (2) comprend un arbre horizontal transversal (7), configuré pour tourner sur lui-même, solidaire d'un élément de balayage (8) qui est choisi dans le groupe comprenant: une pluralité de lames, une pluralité de dents et une pluralité de disques, ledit élément de balayage (8) étant réparti le long dudit arbre transversal (7), dans lequel l'arbre horizontal transversal est configuré pour transmettre un mouvement de rotation à l'élément de balayage (8), la rotation de l'arbre transversal (7) étant actionnée par un deuxième système d'autopropulsion.

2. Râteau andaineur selon la revendication précédente, dans lequel les systèmes d'autopropulsion sont choisis dans un groupe comprenant un moteur hydraulique, un moteur électrique et une transmission mécanique.

3. Râteau andaineur selon l'une quelconque des revendications précédentes, dans lequel le sens de rotation de l'arbre transversal (7) qui fait tourner l'élément de balayage (8) est configuré pour que ledit élément de balayage (8) pousse le fourrage vers le sol à ratisser.

4. Râteau andaineur selon l'une quelconque des revendications précédentes, dans lequel l'élément de balayage (8) est partiellement recouvert par un carter (9) compris dans le rotor à lames (2).

5. Râteau andaineur selon l'une quelconque des revendications précédentes, dans lequel l'élément de balayage (8) comprend une matière plastique.

6. Râteau andaineur selon l'une quelconque des revendications 1 à 4, dans lequel l'élément de balayage (8) comprend une matière métallique.
